## Europäisches Patentamt
## European Patent Office
## Office européen des brevets

(19)

(11) Veröffentlichungsnummer: **0 038 018**
**B1**

(12)

# EUROPÄISCHE PATENTSCHRIFT

(45) Veröffentlichungstag der Patentschrift:
**21.09.83**

(51) Int. Cl.³: **F 25 B 43/02**

(21) Anmeldenummer: **81102633.5**

(22) Anmeldetag: **08.04.81**

(54) **Ölabscheider für Verdichter von Wärmepumpen und Kältemaschinen.**

(30) Priorität: **12.04.80 DE 3014148**

(43) Veröffentlichungstag der Anmeldung:
**21.10.81 Patentblatt 81/42**

(45) Bekanntmachung des Hinweises auf die Patenterteilung:
**21.09.83 Patentblatt 83/38**

(84) Benannte Vertragsstaaten:
**AT CH FR GB LI NL SE**

(56) Entgegenhaltungen:
**DE-A-1 501 022**
**DE-A-2 261 149**
**DE-A-2 308 481**
**DE-A-2 329 801**
**DE-A-2 333 055**
**DE-A-2 718 513**
**DE-C-611 207**
**FR-A-1 295 262**
**US-A-2 285 123**
**US-A-2 867 098**
**US-A-2 910 136**
**US-A-3 070 977**
**US-A-3 212 232**
**US-A-3 477 208**
**US-A-3 534 564**
**US-A-3 917 474**
**US-A-4 092 137**

(73) Patentinhaber: **M.A.N. MASCHINENFABRIK AUGSBURG-NÜRNBERG Aktiengesellschaft, Dachauer Strasse 667 Postfach 50 06 20, D-8000 München 50 (DE)**

(72) Erfinder: **Willeitner, Eberhard, Ing. grad., Am Dorfbrunnen 10, D-8919 Utting a. Ammersee (DE)**

## Ölabscheider für Verdichter von Wärmepumpen und Kältemaschinen

Die Erfindung bezieht sich auf einen Ölabscheider für Verdichter von Wärmepumpen und Kältemaschinen zur Abscheidung des Öles aus einem Kältemittel/Öl-Dampfgemisch, bestehend aus einem horizontal sich erstreckenden Behälter, in dem das Dampfgemisch den Behälterraum horizontal in Längsrichtung durchläuft und mindestens ein in Strömungsrichtung dem Abweiser nachgeschalteter Filter oder Demister angeordnet ist, und wobei das abgeschiedene Öl zur Weiterführung zum Verdichter im Behälter gesammelt wird.

Ölabscheider werden verwendet, um aus dem Kältemittel das aus dem Verdichter mitgerissene Öl abzuscheiden. Das abgeschiedene Öl wird dem Verdichter wieder zugeleitet, während das vom Öl befreite Kältemittel in einen Kondensator strömt.

Es ist ein Ölabscheider bekannt, der aus einem zylinderförmigen, senkrecht angeordneten Behälter besteht, in dem das Dampfgemisch am oberen Ende eingelassen wird und in etwa in der Mitte des Behälters über ein Rohr hinausgeleitet wird. Das in dem Behälter abwärts strömende Dampfgemisch wird zur Verbesserung der Ölabscheidung mittels Leitblechen schlangenförmig umgelenkt, bis es schliesslich auf der Höhe des Abführstutzens senkrecht nach oben umgelenkt und durch einen um das Abführrohr angeordneten Filter durchgeführt wird.

Diese bekannte Vorrichtung hat jedoch den Nachteil, dass der Dampfstrom und die aufgrund der Schwerkraft fallenden Öltropfen die gleiche Bewegungsrichtung einnehmen und sich in ihrer Bahn mehrmals treffen, so dass eine erneute Vermischung immer wieder stattfinden kann. Ferner wird das in dem Behälter unten sich ansammelnde, frisch abgeschiedene Öl verhältnismässig schnell wieder abgeführt, so dass das unvermeidlich vom Öl mitgerissene Kältemittel mit in den Verdichter gelangt (vergleiche DE-OS Nr. 2522764).

Aus der FR-PS Nr. 1295262 ist ein horizontal sich erstreckender Ölabscheider gemäss dem Oberbegriff bekannt. Bei dieser Vorrichtung werden zunächst mit dem Ölabweiser die grössten Öltröpfchen aus dem Dampfgemisch herausgetrennt, so dass der nachgeschaltete Filter oder Demister, der eine Feinabscheidung durchführt, nicht gleich mit Öl verschmiert und damit verstopft wird. Die dritte Abscheidungsmöglichkeit ergibt sich aus dem langen horizontalen Weg, den das Dampfgemisch innerhalb des Abscheidebehälters zu hinterlegen hat. Hierbei haben die Öltröpfchen, die mit einer horizontalen Strömungs- und einer Schwerkraftkomponente behaftet sind, Zeit, um in ihrem parabelförmigen Weg sich aus dem Strömungsfeld heraus zu bewegen und damit nur noch dem Schwerkraftfeld ausgesetzt zu sein. Mit dieser bekannten Ausführung wird zwar eine deutliche Verbesserung gegenüber dem vorgenannten senkrechten Ölabscheider erreicht, jedoch reicht die Trennqualität der beiden zu trennenden Komponenten noch nicht für anspruchsvolle Anwendungen aus.

Bei Wärmepumpen ist es nämlich erforderlich, das im Verdichter miteinander vermischte Kältemittel und Öl vor ihrer Weiterführung in den Kondensator bzw. in den Verdichter in einem hohen Grade wieder zu trennen. Wird das Öl nicht in ausreichendem Masse vom Kältemittel getrennt, so hat das den doppelten Nachteil, dass das Öl einerseits dem Kompressor entzogen wird, und dass andererseits die Wärmeaustauschflächen des Kondensators und Verdampfers verölt werden, was den Wärmeaustausch beeinträchtigt. Verbleibt auf der anderen Seite im Öl zu viel Kühlmittel, so würde das für die Funktion des Kompressors ein schädliches Aufschäumen hervorrufen.

Der Erfindung liegt die Aufgabe zugrunde, einen Ölabscheider der eingangs genannten Art dahingehend zu verbessern, dass für hohe Anforderungen ein ausreichender Abscheidewirkungsgrad erreicht werden kann.

Die Aufgabe wird erfindungsgemäss dadurch gelöst, dass im Behälter mindestens eine Trennwand senkrecht zur Längsachse des Behälters angeordnet ist, die am unteren, im Ölsumpf eintauchenden Ende durchbrochen ist und oberhalb des Ölsumpfspiegels den Demister trägt, dass der Durchströmungsquerschnitt des Demisters kleiner ist als die Fläche der Trennwand oberhalb des Ölspiegels, derart, dass eine Verwirbelung des Dampfstromes nach Durchtritt durch den Demister erfolgt, und dass der Durchströmungsquerschnitt noch gross genug ist, um einen Druckabfall zu vermeiden, und dass der Demister in Strömungsrichtung des Dampfgemisches so lang ausgelegt ist, dass die von der Strömung mitgerissenen Öltröpfchen mit dem am Demistergitter anhaftenden Öl sich zu grösseren Tropfen verbinden können.

Mit dieser Ausbildung ist erreicht, dass gegenüber bekannten Abscheidetechniken eine Verringerung des Bauvolumens sowie eine Verbilligung der Vorrichtung mit einem hohen Abscheidewirkungsgrad verbunden ist.

Bei der Trennung der Öltröpfchen vom Gemisch wird nicht reines Öl, sondern mit einem gewissen Anteil Kühlmittel behaftetes Öl abgeschieden. Der im Öl eingeschlossene Kältemitteldampf löst sich dann in Ölsumpf, indem es als Dampfbläschen aufsteigt. In dieser Hinsicht führt der horizontale und durch die Trennwände hervorgerufene lange Strömungsweg des Öles dazu, dass der Kältemitteldampf auch Zeit hat, nahezu bis zur Sättigung aus dem Ölsumpf herauszusprudeln.

Neben der Verlängerung des Ölströmungsweges dient die Trennwand gleichzeitig als Träger des Demisters und als Hindernis, das ein Schwappen des Ölsumpfes verhindert.

Der für den Demister gewählte Durchströmungsquerschnitt bewirkt, dass einerseits der aus dem Demister herausströmende Dampf durch die Erweiterung des nachfolgenden Raumes

Randwirbel bildet, was eine zusätzliche Abscheidewirkung in das System einbringt, und dass andererseits kein zu hoher Druckunterschied in den durch den Demister und Trennwand gebildeten Kammern erfolgt, der einen unterschiedlichen Ölstand in den verschiedenen Kammern verursachen könnte.

Die Demisterlänge gewährleistet ferner die Bildung von grösseren Tropfen aus der Vereinigung von kleinen leichten Tröpfchen, so dass beim Austritt des Demisters die Tropfen mit grösserer Sicherheit herunterfallen können.

Es ist somit mit ganz einfachen Mitteln eine ausreichende Trennung der beiden gemischten Komponenten voneinander gewährleistet, so dass andererseits die vom Kühlmitteldampf durchströmten Bauteile der Anlage weitgehend nicht veröit werden, und andererseits eine ausreichende Kühlung des Kompressors mit nicht schäumendem Öl gewährleistet werden kann. Dieses hat zur Folge, dass Wärmepumpen bzw. Kälteanlagen hergestellt werden können, die fertigungstechnisch einfacher und preiswerter sind, zusätzlich einen hohen Wirkungsgrad haben und weniger gewartet werden müssen.

Im Bedarfsfall können mehrere Demister hintereinander geschaltet werden und derart, dass zwischen ihnen je ein Abstand für die Abtrennung durch Schwerkraft der im vorhergehenden Demister gebildeten Tropfen freibleibt. Auf diese Weise kann bei sukzessiv feiner werdenden Abscheidung ein sehr hoher Trenngrad erreicht werden.

Ein Ausführungsbeispiel gemäss der Erfindung ist in der Zeichnung schematisch dargestellt. Es zeigen:

Fig. 1 einen Längsschnitt,

Fig. 2 eine Draufsicht, und

Fig. 3 einen Querschnitt des Ausführungsbeispieles.

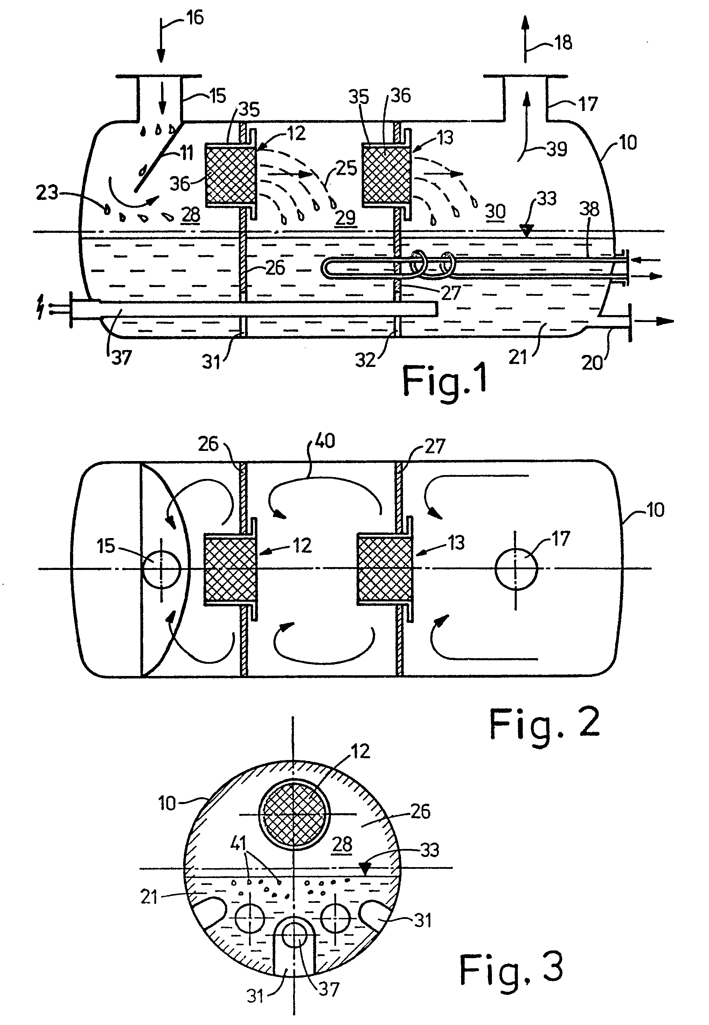

In Fig. 1 ist ein Ölabscheider gezeigt, der aus einem Behälter 10 und einem darin angeordneten Abweiser 11 sowie zwei Demistern 12 und 13 besteht. Der Behälter 10 ist ein liegend angeordneter längerer Zylinder mit abgeschlossenen Enden, der an einem Ende einen Einlaufstutzen 15 für das Kältemittel/Öl-Dampfgemisch 16 und am unteren Ende einen Auslaufstutzen 17 für den Kältemitteldampf 18 aufweist. Es ist schliesslich noch ein Auslaufstutzen 20 für das sich im Behälter ansammelnde abgeschiedene Öl vorgesehen, der an der unteren Seite und am Einlaufstutzen 15 entgegengesetzten Ende angeordnet ist. Um eine erste Umlenkung des Dampfes 16 in ganz einfacher Art herzustellen, kann der Einlaufstutzen 15, wie in der Zeichnung dargestellt, anstelle an der Stirnseite am oberen Mantelende des Behälters 10 einmünden.

Das durch den Einlaufstutzen 15 in den Behälter 10 einströmende Gemisch 16 wird zunächst durch den Abweiser 11 umgelenkt, so dass die grössten Öltropfen 23 abgetrennt werden und der direkte Zugang zum Demister 12 vermieden wird, um eine Verölung mit der Folge einer Verstopfung des Demisters 12 zu vermeiden. Die Expansion des in einen grösseren Raum eintretenden Gases bewirkt eine Abbremsung der Strömungsgeschwindigkeit, die den Vorteil mit sich bringt, dass die den Öltropfen auferlegte Schwerkraft gegenüber der aus der Strömung resultierenden Kraft an Bedeutung gewinnt. Durch die Anordnung der Einlauf- bzw. Auslaufstutzen 15 bzw. 17 ergibt sich im Behälter ein im wesentlichen horizontal verlaufender Dampfstrom. Bei einer relativ langsamen Strömungsgeschwindigkeit können dabei die Öltropfen aufgrund der Schwerkraft sowohl innerhalb der Demister 12, 13 als auch im freien Strömungsbereich schneller aus dem Strom abfallen. Um die Wurfparabeln 25 der aus dem ersten Demister heraustretenden Öltropfen nicht zu unterbrechen, ist der zweite Demister 13 mit einem genügenden Abstand vom ersten Demister 12 angeordnet, so dass die Tropfen die Möglichkeit haben, in den Ölsumpf zu fallen und nicht am zweiten Demister hängen zu bleiben.

Der Behälter 10 ist ferner durch zwei Trennwände 26, 27 in drei Kammern 28, 29 und 30 unterteilt. Diese Trennwände 26 und 27 dienen einerseits zur Halterung der Demister 12 und 13 und andererseits dazu, dass der Ölsumpf 21 bei Erschütterungen der Anlage, insbesondere beim Anlaufen, nicht zum Schwappen kommt, was den Abscheidungsvorgang nachteilig beeinträchtigen kann. Das Öl in den verschiedenen Kammern 28 bis 30 steht über Durchbrüchen 31, 32 in den Trennwänden 26, 27 miteinander in Verbindung.

Die Demister 12 und 13 bestehen aus zylindrischen Hülsen 25, in denen ein Drahtgeflecht 36 angeordnet ist. Der Querschnitt der Hülse 35 ist kleiner als die aus dem Ölsumpf 21 herausragende Fläche der zugeordneten Trennwand 26 bzw. 27. Auf diese Weise schliessen die Demister 12 und 13 nicht mit der Behälterwand ab, so dass der Dampfstrom nach dem Durchqueren eines Demisters in der darauffolgenden Kammer expandiert und am Rand Wirbel 40 bildet (Fig. 2). Diese Wirbel 40 sollen eine zusätzliche Abscheidungswirkung hervorrufen. Um die Bauhöhe des Behälters 10 möglichst niedrig zu halten, genügt es, dass die Demister 12 und 13 nicht die volle Breite des Behälters einnehmen und die Wirbelbildung lediglich seitlich, wie in Fig. 2 dargestellt, erfolgt. Schliesslich wirkt die Umlenkung 39 vor dem Austritt durch den Stutzen 17 zu einer weiteren Trennung von gegebenenfalls noch verbleibendem Öl aus dem Dampfstrom 18.

In Fig. 3 ist ein Querschnitt durch die Kammer 28 gezeigt, in der die Durchbrüche 31 in der Trennwand 26 näher dargestellt sind. Diese Durchbrüche 31, die auch durch einen einzigen grösseren Durchbruch ersetzt werden können, sind in der Bodennähe des Behälters 10 angeordnet. Das hat den Zweck, dass das frisch eintropfende und einen gewissen Anteil an Kühlmitteldampf enthaltende Öl nicht auf dem direktesten Weg in die nächste Kammer strömen kann, um damit dem eingeschlossenen Kältemitteldampf Zeit zu lassen, um als Bläschen 41 aus dem Ölsumpf 21 heraussprudeln zu können. Hierzu verhilft ausserdem der lange Strömungsweg durch die gesamte Länge des Behälters 10. Die Aufnahmebereitschaft von

Kältemitteldampf durch das Öl nimmt mit steigender Temperatur des Öles ab. Es ist deshalb in dem Abscheider eine Heizstange 37 vorgesehen, die das Aussprudeln des Kältemitteldampfes in den Betriebspausen der Anlage sicherstellt.

Der Abscheider ist so ausgebildet, dass sich sowohl Heizstäbe 37 als auch Kühlschlangen 38 fertigungstechnisch ohne Mehraufwand einfach einbauen lassen.

**Patentansprüche**

1. Ölabscheider für Verdichter von Wärmepumpen und Kältemaschinen zur Abscheidung des Öles aus einem Kältemittel/Öl-Dampfgemisch, bestehend aus einem horizontal sich erstreckenden Behälter, in dem das Dampfgemisch den Behälterraum horizontal in Längsrichtung durchläuft, und im Strömungsweg des Dampfgemisches ein Ölabweiser und mindestens ein in Strömungsrichtung dem Abweiser nachgeschalteter Filter oder Demister angeordnet ist, und wobei das abgeschiedene Öl zur Weiterführung zum Verdichter im Behälter gesammelt wird, dadurch gekennzeichnet, dass im Behälter (10) mindestens eine Trennwand (26) senkrecht zur Längsachse des Behälters angeordnet ist, die am unteren, im Ölsumpf (21) eintauchenden Ende durchbrochen ist und oberhalb des Ölsumpfspiegels (33) den Demister (12) trägt, dass der Durchströmungsquerschnitt des Demisters kleiner ist als die Fläche der Trennwand oberhalb des Ölspiegels, derart, dass eine Verwirbelung des Dampfstromes nach Durchtritt durch den Demister erfolgt, und dass der Durchströmungsquerschnitt noch gross genug ist, um einen Druckabfall zu vermeiden, und dass der Demister in Strömungsrichtung des Dampfgemisches (16) so lang ausgelegt ist, dass die von der Strömung mitgerissenen Öltröpfchen mit dem an Demistergitter anhaftenden Öl sich zu grösseren Tropfen verbinden können.

2. Ölabscheider nach Anspruch 1, dadurch gekennzeichnet, dass in der Strömung des Dampfgemisches (16) zwei Demister (12, 13) mit Abstand hintereinander angeordnet sind, wobei der Abstand grösser ist als die Reichweite der aus dem ersten Demister (12) heraustretenden Öltropfen.

3. Ölabscheider nach einem der vorhergehenden Ansprüche, dadurch gekennzeichnet, dass eine Heizvorrichtung (37, 38) im Ölsumpf innerhalb des Behälters (10, 51) vorgesehen ist.

4. Ölabscheider nach einem der vorhergehenden Ansprüche, dadurch gekennzeichnet, dass eine Kühlvorrichtung (38, 69) im Ölsumpf des Behälters (10, 51) vorgesehen ist.

**Claims**

1. An oil separator for compressors of heat pumps and refrigerating machines for separating the oil from a refrigerant/oil/vapour mixture, consisting of a horizontally extending tank in which the vapour mixture passes through the tank chamber horizontally in the longitudinal direction, and an oil deflector and at least one filter or demister disposed down-stream thereof are provided in the flow path of the vapour mixture, the separated oil being collected in the tank for transmission to the compressor, characterized in that the tank (10) contains at least one partition (26) disposed at right angles to the longitudinal axis of the tank, said partition being formed with an aperture at the bottom end immersed in the oil sump (21) and bearing the demister (12) above the oil sump level (33), that the flow cross-section of the demister is smaller than the area of the partition above the oil level so that a turbulent vapour flow is produced after the vapour has passed through the demister, that the flow cross-section is still sufficiently large to avoid a pressure drop, and that the demister is of such length in the direction of flow of the vapour mixture (16) that the oil droplets entrained by the flow can join with the oil adhering to the demister grid to form larger drops.

2. An oil separator according to claim 1, characterized in that two demisters (12, 13) are disposed in consecutive spaced relationship in the flow of the vapour mixture (16), the spacing between them being greater than the range of the oil drops emerging from the first demister (12).

3. An oil separator according to any one of the preceding claims, characterized in that a heating device (37, 68) is provided in the oil sump inside the tank (10, 51).

4. An oil separator according to any one of the preceding claims, characterized in that a cooling device (38, 69) is provided in the oil sump of the tank (10, 51).

**Revendications**

1. Séparateur d'huile pour des compresseurs de pompes à chaleur et de machines frigorifiques, pour la séparation de l'huile à partir d'un mélange fluide frigorigène/huile/vapeur, constitué par un réservoir s'étendant horizontalement, dans lequel le mélange de vapeur traverse l'espace du réservoir horizontalement suivant la direction longitudinale, dans lequel se trouvent disposés, sur le trajet d'écoulement du mélange de vapeur, un déflecteur d'huile et au moins un filtre ou un séparateur de gouttes monté en aval du déflecteur suivant la direction d'écoulement, et dans lequel l'huile séparée est collectée pour être transférée en direction du compresseur dans le réservoir, caractérisé en ce que dans le réservoir (10) se trouve disposée, perpendiculairement à l'axe longitudinal du réservoir, au moins une paroi de séparation (26) qui est interrompue au niveau de l'extrémité inférieure pénétrant dans le bain d'huile (21) et porte le séparateur de gouttes (12) au-dessus du niveau (33) du bain d'huile, en ce que la section transversale de traversée du séparateur de gouttes est inférieure à la surface de séparation au-dessus de la surface de l'huile, de telle sorte qu'il se produit un tourbillonnement du courant de vapeur après sa traversée dans le séparateur de gouttes, en ce que la section transversale d'écoulement est encore suffisamment importante pour éviter une chute de pression et en ce que le séparateur de gouttes possède, suivant la direction d'écoulement du mélange de vapeur (16), une longueur telle que les gouttelettes d'huile entraînées par l'écoulement peuvent s'associer à l'huile adhérant à la grille du séparateur de gouttes pour former des gouttes plus importantes.

2. Séparateur d'huile selon la revendication 1, caractérisé en ce que dans l'écoulement du mélange de vapeur (16) se trouvent disposés à une certaine distance l'un derrière l'autre deux séparateurs de gouttes (12, 13), ladite distance étant supérieure à la distance de parcours des gouttelettes d'huile sortant du premier séparateur de gouttes (12).

3. Séparateur d'huile selon l'une des revendications précédentes, caractérisé en ce qu'un dispositif de chauffage (37, 68) est prévu dans le bain d'huile à l'intérieur du réservoir (10, 51).

4. Séparateur d'huile selon l'une des revendications précédentes, caractérisé en ce qu'un dispositif de refroidissement (38, 69) est prévu dans le bain d'huile du réservoir (10, 51).

Fig.1

Fig. 2

Fig. 3